# FASCICULE DE BREVET EUROPEEN

(11) **EP 0 873 000 B1**
(45) Date de publication et mention de la délivrance du brevet: **18.10.2006**
(21) Numéro de dépôt: 98400919.1
(22) Date de dépôt: 14.04.1998
(51) Int. Cl.: H04M 11/00

(54) **Etablissement d'une communication entre deux terminaux de télécommunication**
Verbindungsaufbau zwischen zwei Telekommunikationsendgeräten
Call set up between two telecommunication terminals

(30) Priorité: 18.04.1997 FR 9704934
(43) Date de publication de la demande: 21.10.1998
(73) Titulaire: FRANCE TELECOM, 75015 Paris (FR)
(72) Inventeur: Lottin, Philippe, 22300 Lannion (FR)
(74) Mandataire: Cabinet Martinet & Lapoux

(56) Documents cités:
- WO-A-94/27396
- US-A- 5 359 641
- US-A- 5 579 381

## Description

La présente invention concerne de manière générale l'établissement d'une communication entre des terminaux de télécommunications.

Plus particulièrement, lorsqu'un premier terminal de télécommunications souhaite établir une communication avec un second terminal de télécommunications branché sur une ligne téléphonique en parallèle avec un terminal téléphonique d'usager classique, le second terminal est averti de la demande d'établissement de communication par un courant d'appel envoyé par son commutateur de rattachement. Le second terminal prend alors la ligne après réception d'un nombre prédéterminé d'impulsions de sonnerie. En pratique, le courant d'appel envoyé par le commutateur de rattachement est également reçu par le terminal téléphonique d'usager classique, ce qui active la sonnerie d'appel de ce dernier.

Lorsque le second terminal est un terminal de prestataire, par exemple un terminal télédomotique installé chez un usager pour transmettre à un centre de facturation distant des données mémorisées dans un compteur de consommation d'eau, d'électricité, de gaz, etc., toute demande d'établissement de communication transmise au terminal télédomotique active la sonnerie du terminal téléphonique classique de l'usager, ce qui invite à tort l'usager à procéder à une opération de décrochage/prise de ligne au moyen de son terminal téléphonique classique.

Dans un système de communication téléphonique selon la WO-A-9427396, une installation d'abonné comprend des terminaux téléphoniques et une interface de télémétrie reliés par une ligne téléphonique d'abonné à un commutateur incluant un processeur de commande. Deux messages séquentiels sont transmis par une unité de service centrale au processeur de commande sur une jonction de télémétrie afin d'appeler depuis un contrôleur l'interface de télémétrie sans appeler les terminaux téléphoniques de l'installation d'usager. Le premier message contient des données codées pour l'interface de télémétrie. Le deuxième message se termine par un signal qui requiert une connexion à la ligne d'abonné appelée incluant une salve de, sonnerie d'appel qui est de durée plus courte qu'un signal de sonnerie classique. La courte salve peut activer un terminal dans l'installation d'abonné.

Le US-A-5189694 cité dans la WO-A-9427396 concerne un appel d'une interface de mesure depuis une unité de service centrale à travers un réseau de commutateur et une ligne téléphonique d'usager en évitant de déranger l'usager. Un mode de télémétrie est déclenché par une brève slave de sonnerie transmise par l'unité centrale à travers le réseau de commutateur et la ligne téléphonique à l'interface de mesure. La slave de sonnerie est suffisamment courte pour qu'aucun signal de sonnerie ne soit répété et ne dérange l'usager.

La présente invention vise à remédier aux inconvénients précités en fournissant un procédé d'établissement de communication qui permette à un terminal de télécommunications, tel qu'un terminal télédomotique, de recevoir un appel d'un terminal distant sans faire sonner le terminal téléphonique d'usager classique branché sur la même ligne téléphonique que le terminal de télécommunications, même si la ligne téléphonique est associée à des services téléphoniques activés ou est invalidée.

A cette fin, un procédé d'établissement d'une communication entre un premier terminal et un second terminal à travers un réseau téléphonique, ledit second terminal étant connecté en parallèle avec un terminal téléphonique muni d'un moyen de signalisation d'appel sur une ligne téléphonique commune reliée au réseau téléphonique, est tel que caractérisé dans la revendication 1.

Le second terminal prend la ligne, c'est-à-dire décroche, non pas après la détection d'un courant d'appel envoyé par le réseau téléphonique, mais après la détection d'un message de signalisation codé. Aucun courant d'appel n'a besoin d'être généré par le réseau téléphonique pour avertir le second terminal de la demande d'établissement de communication, de sorte que dans le terminal téléphonique connecté en parallèle avec le second terminal, le moyen de signalisation d'appel, tel que sonnerie d'appel, n'est pas activé pendant l'établissement de la communication entre les premier et second terminaux.

Afin de rendre les communications du second terminal indépendantes de services téléphoniques concernant le terminal téléphonique, l'étape d'inhibition d'au moins un service téléphonique activé dans le réseau téléphonique pour/par le terminal téléphonique est mise en oeuvre de manière temporaire pour l'établissement de la communication entre les premier et second terminaux.

Typiquement, le procédé comprend en outre les étapes selon la revendication 2.

Le commutateur téléphonique est par exemple un commutateur d'accès aux services commandé par un point de commande de services. Les informations de signalisation sont produites par le point de commande de services et transmises à travers le réseau téléphonique par le commutateur d'accès aux services pour informer le commutateur de rattachement du second terminal de la réception d'une demande d'établissement de communication émanant du premier terminal et destinée au second terminal. Les informations de signalisation concernent notamment l'identification des premier et second terminaux.

Si un service tel que le renvoi d'appel inconditionnel, le filtrage d'appel, etc., a été activé par l'usager du terminal téléphonique, tout appel à destination du second terminal se verra appliquer le service. Ainsi, si le service de renvoi d'appel inconditionnel a été activé, aucun appel ne pourra être présenté au second terminal.

En outre, une étape est prévue pour valider la ligne téléphonique desservant le second terminal, en particulier lorsque les communications téléphoniques via la ligne téléphonique sont interdites, suspendues ou transférées. La validation de la ligne téléphonique est mise en oeuvre de manière temporaire pour l'établissement de la communication entre les premier et second terminaux. Cette validation autorise la transmission d'une demande d'établissement de communication vers le second terminal même si le commutateur de rattachement du second terminal est programmé pour ne pas transmettre de communications sur la ligne téléphonique, par exemple si l'usager de la ligne téléphonique a résilié son abonnement téléphonique.

Les informations de signalisation peuvent alors comprendre au moins un indicateur de forçage pour valider dans le commutateur de rattachement du second terminal la ligne téléphonique desservant le second terminal.

Afin que le message de signalisation codé ne puisse être reconnu que par le second terminal, en particulier lorsque d'autres terminaux que le second terminal capables de décoder des données sont branchés en parallèle avec le second terminal, le message de signalisation codé comprend de préférence un identificateur du second terminal. Cet identificateur peut être produit par le réseau téléphonique, et notamment par le point de commande de services précité, en fonction de données fournies par le premier terminal.

Selon l'invention, le procédé comprend également, suite à ladite mise en communication du premier terminal et du second terminal par le réseau téléphonique, et lorsqu'une demande d'établissement de communication destinée au terminal téléphonique est reçue par le réseau téléphonique, les étapes :
- transmission par le réseau téléphonique d'un signal d'Indication d'Appel en Instance sur ladite ligne téléphonique,
- détection du signal d'Indication d'Appel en Instance par le second terminal,
- libération de la ligne téléphonique par le second terminal en réponse à la détection du signal d'Indication d'Appel en Instance, et
- présentation de ladite demande d'établissement de communication sur la ligne téléphonique par le réseau téléphonique, par activation du moyen de signalisation d'appel dans le terminal téléphonique.

De cette manière, tout appel téléphonique destiné au terminal téléphonique est prioritaire par rapport aux communications entre les premier et second terminaux.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un système de télécommunications pour la mise en oeuvre du procédé conforme à l'invention ;
- la figure 2 est un algorithme d'établissement d'une communication entre un serveur de prestataire de service et un terminal télédomotique de prestataire de service du système de la figure 1 ;
- la figure 3A est un diagramme de structure d'un message produit par un commutateur de réseau téléphonique du système de la figure 1, desservant une ligne téléphonique reliée au terminal télédomotique ;
- la figure 3B est un diagramme de structure d'un paramètre du message de la figure 3A ;
- la figure 4 est un diagramme illustrant un mode de transmission du message de la figure 3A ; et
- la figure 5 est un algorithme d'établissement d'une communication entre un terminal téléphonique et un terminal télédomotique privé du système de la figure 1.

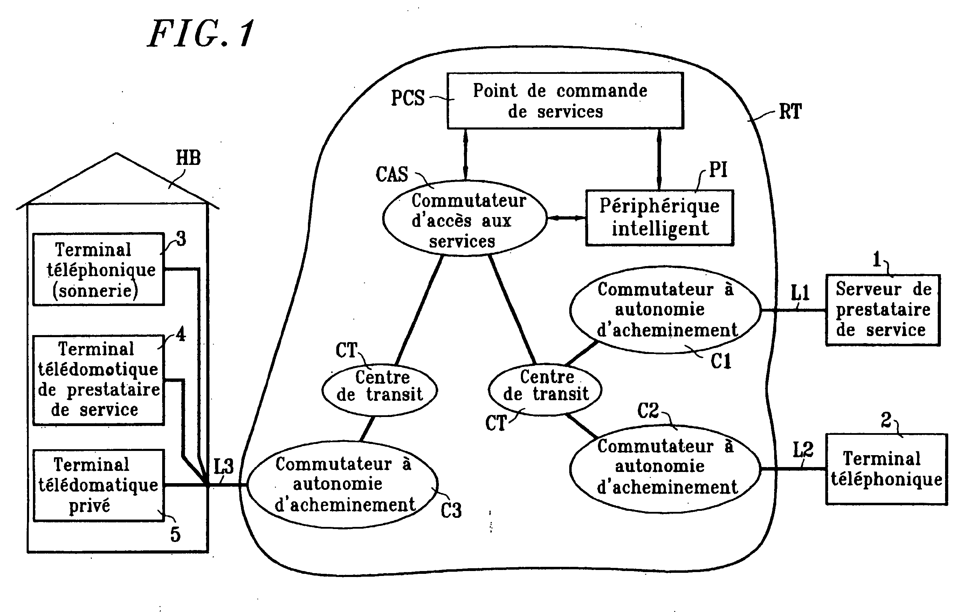

En référence à la figure 1, un serveur de prestataire de service 1, un premier terminal téléphonique 2, un second terminal téléphonique 3, un terminal télédomotique de prestataire de service 4 et un terminal télédomotique privé 5 sont reliés à un réseau téléphonique intelligent RT.

Le serveur de prestataire 1 est rattaché à un premier commutateur à autonomie d'acheminement C1 dans le réseau téléphonique RT à travers une interface numérique RNIS (Réseau Numérique à Intégration de Services) L1, du type interface S. Le premier terminal téléphonique 2 est rattaché à un second commutateur à autonomie d'acheminement C2 dans le réseau téléphonique RT par l'intermédiaire d'une ligne téléphonique d'abonné analogique L2. Le second terminal téléphonique 3 et les terminaux télédomotiques 4 et 5 sont branchés en parallèle sur une même ligne téléphonique d'usager analogique L3 raccordée à un troisième commutateur à autonomie d'acheminement C3 dans le réseau RT. Le terminal téléphonique 3 et les terminaux télédomotiques 4 et 5 sont typiquement inclus dans une même habitation d'usager HB.

Le terminal télédomotique de prestataire 4 est équipé d'un modem, et gère dans l'habitation HB un service télédomotique pour prestataire sur commande du serveur de prestataire 1 à travers le réseau RT. Le service pour prestataire consiste par exemple en une télérelève d'un compteur d'eau, d'électricité ou de gaz installé dans l'habitation HB. Le compteur est relié au terminal télédomotique 4, qui transmet des données mémorisées dans le compteur, telles que la quantité d'eau, d'électricité ou de gaz consommée par un usager dans l'habitation HB pendant une période de temps prédéterminée, au serveur de prestataire 1 au cours d'une communication avec ce dernier.

Le terminal télédomotique privé 5 est également équipé d'un modem, et gère un service télédomotique pour particulier dans l'habitation HB. Par exemple, le terminal télédomotique privé 5 commande une fonction domestique telle que le chauffage central de l'habitation, la fermeture automatique de volets roulants, un arrosage automatique de pelouse, etc., en fonction de données de commande fournies par le terminal téléphonique 2 au cours d'une communication avec le terminal télédomotique 5 à travers le réseau téléphonique RT.

Outre les commutateurs à autonomie d'acheminement C1 à C3, le réseau téléphonique intelligent RT comprend de manière classique des centres de transit CT, un commutateur d'accès aux services CAS, un point de commande de services PCS et un périphérique intelligent PI. Le point de commande de services PCS est un serveur qui contient notamment une base de données et qui commande le commutateur d'accès aux services CAS. En particulier, le point de commande de services PCS gère dans le réseau téléphonique RT les services télédomotiques pour prestataire et particulier précités. Le périphérique intelligent PI, également commandé par le point de commande de services PCS, comprend une boîte vocale pour dialoguer avec des terminaux d'usager tels que le terminal téléphonique 2.

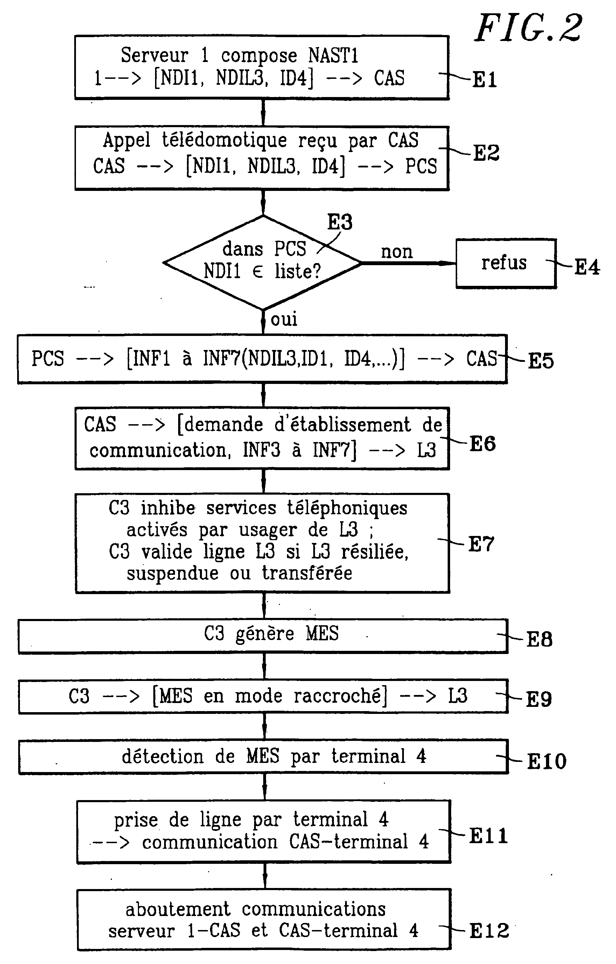

La figure 2 montre un algorithme d'établissement d'une communication entre le serveur de prestataire 1 et le terminal télédomotique de prestataire 4.

A une première étape E1, le serveur 1 effectue une première demande d'établissement de communication, dénommée dans la suite de la description "appel télédomotique", en composant un numéro téléphonique prédéterminé d'accès au service télédomotique pour prestataire NAST1 associé au commutateur d'accès aux services CAS. Le serveur 1 fournit les numéros téléphoniques NDI1 et NDIL3, dits également numéros de désignation de l'installation (NDI), du serveur 1 et de la ligne d'abonné L3, c'est-à-dire du terminal 4, et un identificateur ID4 du terminal télédomotique 4 destinataire de l'appel télédomotique, dans un message de signalisation "ETABLISSEMENT" transmis du serveur 1 vers le réseau téléphonique RT via l'interface RNIS L1.

A une étape E2, l'appel télédomotique, accompagné des données ci-dessus, est acheminé à travers le réseau RT vers le commutateur d'accès aux services CAS qui transmet les numéros de désignation NDI1 et NDIL3 du serveur 1 et de la ligne L3 et l'identificateur ID4 du terminal 4 au point de commande de services PCS.

A une étape E3, le point de commande de services PCS vérifie l'appartenance du numéro de désignation NDI1 du serveur 1 à une liste prédéterminée de numéros de désignation de serveurs ayant droit au service télédomotique pour prestataire.

Si, à l'étape E3, le numéro de désignation NDI1 du serveur 1 ne coïncide avec aucun des numéros de la liste prédéterminée, le point de commande de services PCS produit, à une étape E4, un message de refus d'appel qui est transmis par le commutateur CAS au serveur de prestataire 1 pour informer ce dernier que l'appel télédomotique est refusé et la communication entre le commutateur CAS et le serveur 1 sera rompue.

Si, à l'étape E3, le numéro de désignation NDI1 du serveur 1 appartient à la liste prédéterminée, le point de commande de services PCS génère à une étape E5 des informations codées en binaire INF1 à INF7, qui sont transmises au commutateur d'accès aux services CAS sous la forme d'un ou plusieurs messages successifs de signalisation.

Des premières informations INF1 indiquent au commutateur CAS que le serveur de prestataire 1 a droit au service télédomotique pour prestataire.

Des secondes informations INF2 incluent le numéro de désignation NDIL3 de la ligne téléphonique d'abonné L3 destinataire de l'appel télédomotique.

Des troisièmes informations INF3 désignent le type d'appel, à savoir appel télédomotique pour prestataire.

Des quatrièmes informations INF4 comprennent un identificateur du terminal demandeur de l'appel, c'est-à-dire un identificateur ID1 du serveur de prestataire 1.

Des cinquièmes informations INF5 comprennent un identificateur du terminal destinataire de l'appel, c'est-à-dire l'identificateur ID4 du terminal télédomotique de prestataire 4.

Des sixièmes informations INF6 incluent des indicateurs d'inhibition de service. Chaque indicateur d'inhibition de service est un mot binaire prémémorisé dans les commutateurs du réseau téléphonique RT, qui, lorsqu'il est inclus dans une demande d'établissement de communication reçue par le commutateur de rattachement du terminal d'un usager donné et destinée à ce dernier, inhibe un service téléphonique susceptible d'être activé par l'usager donné. A chaque service existant dans le réseau téléphonique RT, tel que le renvoi d'appel inconditionnel, l'indicateur d'appel en instance, le rappel du dernier appelant, le filtrage d'appel, le rappel automatique sur occupation, etc., est associé un indicateur d'inhibition de service dans les sixièmes informations INF6.

Des septièmes informations INF7 comprennent des indicateurs de forçage. Chaque indicateur de forçage est un mot binaire prémémorisé dans les commutateurs du réseau téléphonique RT, qui, lorsqu'il est inclus dans une demande d'établissement de communication reçue par le commutateur de rattachement du terminal d'un usager donné et destinée à ce dernier, valide la ligne téléphonique de l'usager donné pour autoriser la transmission de la demande d'établissement de communication à travers ladite ligne téléphonique même si les communications téléphoniques à travers cette ligne sont interdites (abonnement de ligne résilié), suspendues ou transférées.

A une étape E6 de l'algorithme de la figure 2, le point de commande de services PCS commande au commutateur d'accès aux services CAS de transmettre à travers le réseau RT une seconde demande d'établissement de communication, destinée à la ligne téléphonique d'abonné L3, et accompagnée des informations de signalisation INF3 à INF7 selon un protocole de signalisation du type CCITT n°7.

A une étape E7, le commutateur de rattachement C3 de la ligne téléphonique L3 reçoit la seconde demande d'établissement de communication, décode les informations INF3 à INF7, et observe l'état de la ligne téléphonique L3. En particulier, si un service téléphonique du type de ceux indiqués ci-dessus a été préalablement activé par l'usager de la ligne téléphonique L3 pour le terminal téléphonique 3, alors le commutateur C3 inhibe temporairement ce service pour l'appel télédomotique en réponse à la détection de l'indicateur d'inhibition associé au service préalablement activé et inclus dans les sixièmes informations INF6. Egalement, si le commutateur C3 constate que les communications téléphoniques à travers la ligne L3 sont interdites, suspendues ou transférées, le commutateur C3 valide temporairement la ligne L3 pour l'appel télédomotique en réponse à la détection des septièmes informations INF7.

A une étape E8, conformément à l'invention, le commutateur C3 génère un message de signalisation codé dit "télédomotique" MES dépendant des informations INF3 à INF5. Le message MES est conforme à l'avis V23 du CCITT et est apte à être reconnu par le modem du terminal télédomotique de prestataire 4.

Le message MES est un message multiple dont la structure est du type défini à la page 9 de la norme ETS 300 659-1, intitulée "Public Switched Telephone Network (PSTN); Subscriber line protocol over the local loop for display (and related) services ; Part 1 : On hook data transmission", éditée en mai 1996 par l'institut de normalisation européen des télécommunications ETSI (European Telecommunications Standards Institute), Sophia Antipolis, France.

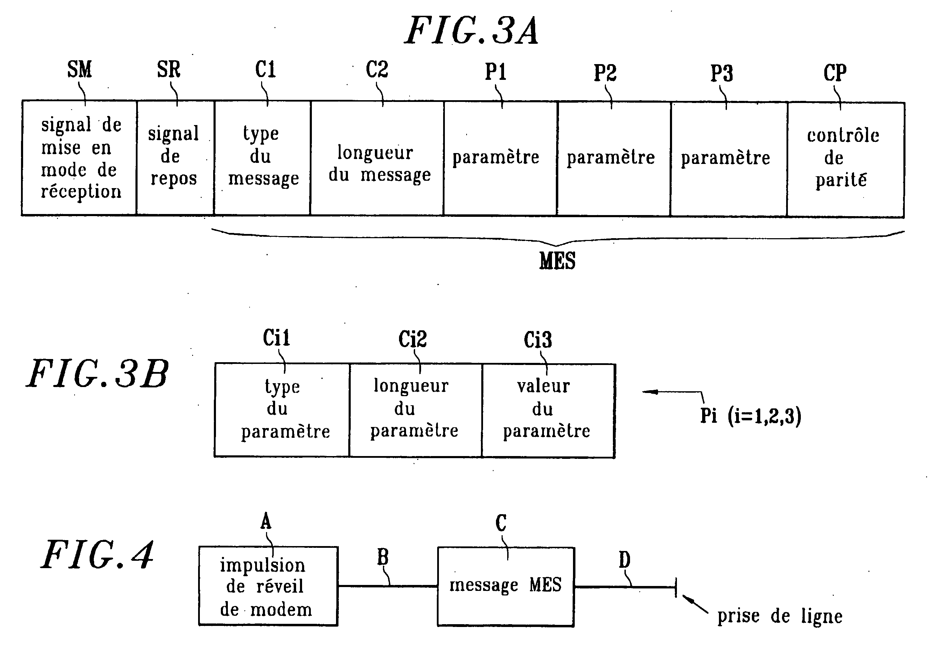

En référence à la figure 3A, le message télédomotique multiple MES comprend des premier et second champs C1, C2 indiquant respectivement le type et la longueur du message, et trois paramètres P1 à P3. Le message MES est précédé par un signal de mise en mode de réception SM, typiquement constitué d'une succession de bits "0" et "1" alternés, et par un signal de repos SR formé d'une succession de bits "1", et se finit par un mot de contrôle de parité CP.

Le champ C1 contient un mot d'information "message d'appel télédomotique".

Chaque paramètre Pi, où i est un entier compris entre 1 et 3, comprend, comme montré à la figure 3B, des premier, second et troisième champs à un octet Ci1 à Ci3 pour indiquer respectivement le type, la longueur et la valeur du paramètre.

Le premier paramètre P1 contient dans son champ de type C11 un mot d'information "type d'appel télédomotique", et dans son champ de valeur C13 un mot pour désigner un appel télédomotique pour prestataire.

Le second paramètre P2 contient dans son champ de type C21 un mot d'information "identification du demandeur de l'appel télédomotique", et dans son champ de valeur C23 l'identificateur ID1 du serveur de prestataire 1.

Le troisième paramètre P3 contient dans son champ de type C31 un mot d'information "identification du terminal destinataire de l'appel télédomotique", et dans son champ de valeur C33 l'identificateur ID4 du terminal télédomotique de prestataire 4.

A une étape E9 de l'algorithme de la figure 2, le commutateur C3 dirige la seconde demande d'établissement de communication, effectuée par le commutateur d'accès aux services CAS, vers la ligne téléphonique d'abonné L3 en transmettant des données sur la ligne L3 en mode dit "raccroché" (en anglais : on hook), c'est-à-dire alors que la ligne L3 est au repos. La transmission des données, basée sur la norme ETS 300 659-1 précitée, est illustrée à la figure 4. Au cours d'une première phase A, une impulsion de réveil est transmise par le commutateur C3 à travers la ligne L3 pour avertir le modem du terminal télédomotique 4 qu'un message va lui être transmis. L'impulsion de réveil est un signal vocal bifréquence à 2130 Hz et 2750 Hz, de durée 100 ms environ. La puissance moyenne et la durée de l'impulsion de réveil sont suffisantes pour réveiller le modem du terminal télédomotique 4, mais insuffisantes pour faire tinter la sonnerie dans le terminal téléphonique 3. Après une seconde phase B de repos, une troisième phase C réservée à la transmission de données est mise en oeuvre au cours de laquelle le message télédomotique multiple MES conforme à l'invention est transmis à travers la ligne téléphonique d'abonné L3 depuis le commutateur C3 en modulation de phase à deux états FSK (Frequency Shift Keying), conformément à l'avis V23 du CCITT. Le message télédomotique MES est reçu par le terminal téléphonique 3, qui l'ignore, et par les terminaux télédomotiques 4 et 5, qui le comparent à des données mémorisées dans ceux-ci. Le terminal télédomotique privé 5 ne reconnaît pas le paramètre d'identification de terminal destinataire P3 et ignore la demande d'établissement de communication. Seul le terminal télédomotique de prestataire 4 reconnaît complètement le message MES à une étape E10. Après une quatrième phase D, dite phase de repos, le terminal télédomotique de prestataire 4 prend la ligne à une étape E11 afin d'établir la communication entre le terminal 4 et le commutateur d'accès aux services CAS.

Une fois la communication établie entre le commutateur d'accès aux services CAS et le terminal télédomotique de prestataire 4, le commutateur CAS répond à l'appel télédomotique émis par le serveur de prestataire 1 en entrant en communication avec ce dernier, puis aboute la communication entre le commutateur CAS et le terminal télédomotique 4 à la communication entre le commutateur CAS et le serveur de prestataire 1 afin de mettre directement en connexion le serveur 1 et le terminal télédomotique 4 à une étape E12.

D'après ce qui précède, le terminal télédomotique de prestataire 4 prend donc la ligne après détection du message télédomotique MES. Aucun courant d'appel n'a besoin d'être envoyé par le commutateur de rattachement C3 de la ligne d'abonné L3, de sorte qu'une communication est établie entre le serveur de prestataire demandeur 1 et le terminal télédomotique de prestataire demandé 4 sans activation de la sonnerie du terminal téléphonique 3 branché sur la ligne L3 en parallèle avec le terminal télédomotique 4.

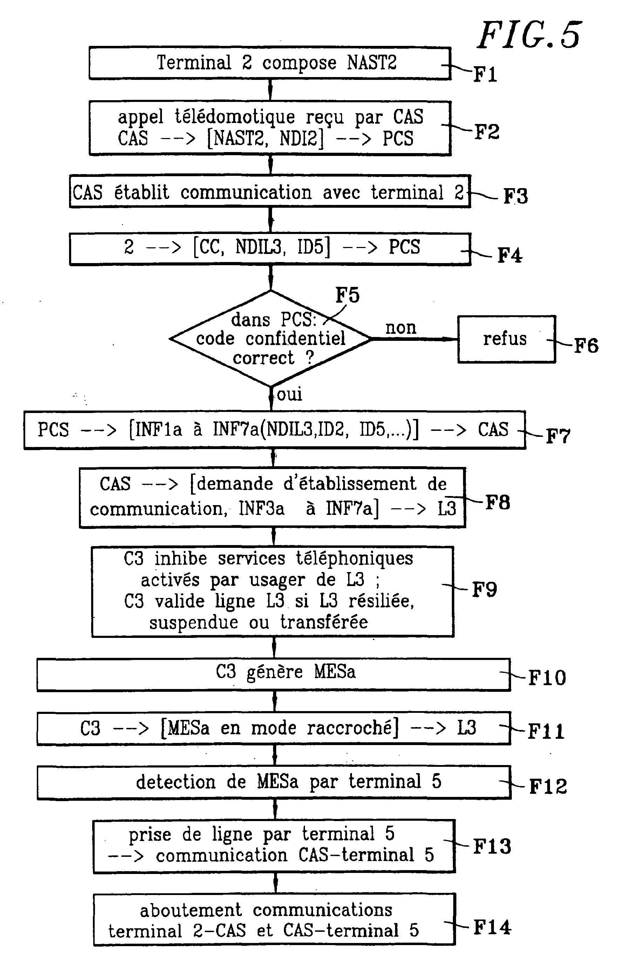

La figure 5 montre un algorithme d'établissement d'une communication entre le terminal téléphonique 2 et le terminal télédomotique privé 5.

A une première étape F1, le terminal téléphonique 2 effectue une première demande d'établissement de communication, dite appel télédomotique, en composant un numéro téléphonique prédéterminé d'accès au service télédomotique pour particulier NAST2. L'appel télédomotique est acheminé à travers le réseau RT vers le commutateur d'accès aux services CAS. Ce dernier fournit au point de commande de services PCS, à une étape F2, le numéro d'accès au service télédomotique pour particulier NAST2 composé par le terminal téléphonique 2 et qui constitue un identificateur du service télédomotique, et le numéro de désignation NDI2 du terminal 2 transmis dans un canal de signalisation par le commutateur de rattachement C2 de celui-ci.

A une étape F3, le point de commande de services PCS commande au commutateur d'accès aux services CAS de répondre à l'appel télédomotique et d'entrer en communication avec le terminal téléphonique 2. Par dialogue vocal via le périphérique intelligent PI, le point de commande de services PCS invite l'usager du terminal téléphonique 2 à composer un code confidentiel CC, le numéro de désignation NDIL3 de la ligne d'abonné L3 destinataire de l'appel télédomotique, et un identificateur ID5 du terminal privé destinataire 5. Après composition de ces trois numéros à une étape F4 par l'usager du terminal téléphonique 2, ces numéros sont codés en code à fréquences vocales DTMF (Dual Tone Multi-Frequency) et transmis au point de commande de services PCS à travers le commutateur CAS.

A une étape F5, le point de commande de services PCS compare le code confidentiel reçu avec des codes préalablement mémorisés. Si, le code transmis ne coïncide avec aucun des codes mémorisés, alors l'appel télédomotique est refusé à une étape F6 et le commutateur CAS rompt la communication avec le terminal téléphonique 2 qui reçoit une tonalité d'occupation de ligne.

Si, à l'étape F5, le code confidentiel coïncide avec l'un des codes mémorisés, le point de commande de services PCS génère à une étape F7 des informations codées en binaire INF1a à INF7a, qui sont transmises au commutateur d'accès aux services CAS sous la forme d'un ou plusieurs messages de signalisation.

Les informations INF1a à INF7a sont du même type que les informations INF1 à INF7 générées par le point de commande de services PCS après un appel télédomotique depuis le serveur de prestataire 1 et décrites précédemment en référence à la figure 2.

En particulier, les premières informations INF1a indiquent au commutateur CAS que l'usager du terminal téléphonique 2 a droit au service télédomotique pour particulier.

Les secondes informations INF2a incluent le numéro de désignation NDIL3 de la ligne téléphonique d'abonné L3 destinataire de l'appel télédomotique.

Les troisièmes informations INF3a désignent le type d'appel, à savoir appel télédomotique pour particulier.

Les quatrièmes informations INF4a comprennent un identificateur du terminal demandeur de l'appel, c'est-à-dire un identificateur ID2 du terminal téléphonique 2.

Les cinquièmes informations INF5a comprennent un identificateur du terminal destinataire de l'appel, c'est-à-dire l'identificateur ID5 du terminal télédomotique privé 5.

Les sixièmes informations INF6a incluent des indicateurs d'inhibition de service téléphonique.

Les septièmes informations INF7a comprennent des indicateurs de forçage.

A une étape F8 de l'algorithme de la figure 5, le point de commande de services PCS commande au commutateur d'accès aux services CAS de transmettre à travers le réseau RT une seconde demande d'établissement de communication, destinée à la ligne téléphonique d'abonné L3 et accompagnée des informations de signalisation INF3a à INF7a.

A une étape F9, le commutateur de rattachement C3 de la ligne téléphonique d'abonné L3 reçoit la seconde demande d'établissement de communication, décode les informations INF3a à INF7a, et observe l'état de la ligne L3. En particulier, si un service téléphonique tel que le renvoi d'appel inconditionnel, etc., a été préalablement activé par l'usager de la ligne L3 pour le terminal téléphonique 3, alors le commutateur C3 inhibe temporairement ce service pour l'appel télédomotique en réponse à la détection de l'indicateur d'inhibition associé au service préalablement activé et inclus dans les sixièmes informations INF6a. Egalement, si le commutateur C3 constate que les commmunications téléphoniques à travers la ligne téléphonique L3 sont interdites, suspendues ou transférées, ce dernier valide temporairement la ligne L3 pour l'appel télédomotique en réponse à la détection des septièmes informations INF7a.

A une étape F10, le commutateur C3 génère un message de signalisation codé MESa, dépendant des informations INF3a à INF5a. Le message MESa, conforme à l'avis V23 du CCITT, est apte à être reconnu par le modem du terminal télédomotique privé 5. La structure du message MESa est celle montrée aux figures 3A et 3B, et est identique à la structure du message MES décrit précédemment. Le champ de valeur C13 du paramètre de type d'appel télédomotique P1 indique un appel télédomotique pour particulier. Le champ de valeur C23 du paramètre d'identification de demandeur P2 comprend l'identificateur ID2 du terminal téléphonique 2. Le champ de valeur C33 du paramètre d'identification de terminal destinataire P3 comprend l'identificateur ID5 du terminal télédomotique privé 5.

A une étape F11, le commutateur C3 dirige la seconde demande d'établissement de communication, effectuée par le commutateur d'accès au services CAS, vers la ligne téléphonique d'abonné L3, en transmettant le message télédomotique MESa ci-dessus sur la ligne L3 en mode raccroché de la même manière que décrit précédemment en référence à la figure 4. A l'issue de la phase de transmission de données C, le message télédomotique MESa est reçu par le terminal téléphonique 3, qui l'ignore, et par les terminaux télédomotiques 4 et 5, qui le comparent à des données mémorisées dans ceux-ci. Le terminal télédomotique de prestataire 4 ne reconnaît pas le paramètre d'identification de terminal destinataire P3 et ignore la demande d'établissement de communication. Seul le terminal télédomotique privé 5 reconnaît complètement le message MESa à une étape F12. A une étape F13, le terminal 5 prend la ligne après la phase de repos D de la figure 4 afin d'établir la communication entre le terminal 5 et le commutateur d'accès aux services CAS.

Une fois la communication établie entre le commutateur d'accès aux services CAS et le terminal télédomotique privé 5, le commutateur CAS aboute la communication déjà établie entre lui-même et le terminal téléphonique 2 suite à l'appel télédomotique émis par ce dernier, à la communication entre lui-même et le terminal télédomotique privé 5 à une étape F14, afin de mettre directement en connexion les terminaux 2 et 5.

Selon l'invention, pendant une communication entre les terminaux 1 et 4 ou entre les terminaux 2 et 5, lorsqu'une demande d'établissement de communication destinée au terminal téléphonique 3 est reçue par le commutateur C3, ce dernier transmet sur la ligne téléphonique d'abonné L3 un signal d'Indication d'Appel en Instance. Le terminal télédomotique 4 ou 5 en communication détecte le signal d'Indication d'Appel en Instance puis libère la ligne téléphonique L3. Le commutateur C3 présente ensuite la demande d'établissement de communication sur la ligne téléphonique L3 de manière classique en envoyant un courant d'appel pour activer la sonnerie du terminal téléphonique 3, qui peut alors prendre la ligne.

Dans la description ci-dessus, et en particulier dans la réalisation montrée à la figure 1, le commutateur d'accès aux services CAS est un centre de transit dans le réseau téléphonique RT. En variante, chaque commutateur à autonomie d'acheminement C1 à C3 dans le réseau RT est un commutateur d'accès aux services, auquel est associé un point de commande de services. Les fonctions du commutateur CAS décrites en référence à la figure 2 et concernant l'établissement d'une communication entre le serveur de prestataire de service 1 et le terminal télédomotique de prestataire de service 4 sont alors assurées par le commutateur à autonomie d'acheminement C1, et les fonctions du commutateur CAS décrites en référence à la figure 5 et concernant l'établissement d'une communication entre le terminal téléphonique 2 et le terminal télédomotique privé 5 sont assurées par le commutateur à autonomie d'acheminement C2.

## Revendications

1. Procédé d'établissement d'une communication entre un premier terminal (1;2) et un second terminal (4;5) à travers un réseau téléphonique (RT), ledit second terminal étant connecté en parallèle avec un terminal téléphonique (3) muni d'un moyen de signalisation d'appel sur une ligne téléphonique commune (L3) reliée à un commutateur de rattachement (C3) du réseau téléphonique, comprenant, suite à une première demande d'établissement de communication transmise (E1;F1) par le premier terminal (1;2) au réseau téléphonique (RT) les étapes suivantes :
- si le commutateur de rattachement (C3) reçoit un indicateur d'inhibition (INF6;INF6a) associé à un service téléphonique activé pour le terminal téléphonique (3) préalablement à la première demande d'établissement de communication, inhibition (E7;F9) du service téléphonique activé dans le réseau téléphonique (RT) pour le terminal téléphonique (3),
- si le commutateur de rattachement (C3) reçoit un indicateur de forçage (INF7;INF7a) indiquant que des communications téléphoniques via ladite ligne téléphonique (L3) sont interdites, suspendues ou transférées, préalablement à la première demande d'établissement de communication, validation temporaire de la ligne téléphonique,
et les étapes suivantes à travers la ligne téléphonique commune :
- transmission (A, E9; F10) depuis le réseau téléphonique (RT) à travers la ligne téléphonique (L3) au second terminal (4;5) d'une impulsion de réveil dont la puissance moyenne et la durée sont suffisantes pour réveiller le second terminal et insuffisantes pour activer le moyen de signalisation d'appel dans le terminal téléphonique (3),
- transmission (B ; E9;F10) d'un message de signalisation codé (MES;MESa) contenant un identificateur du second terminal (4;5) depuis le réseau téléphonique (RT) vers la ligne téléphonique (L3) reliée au second terminal (4;5) et au terminal téléphonique (3),
- détection (E10;F12) du message de signalisation codé par le second terminal (4;5),
- prise (E11;F13) de la ligne téléphonique (L3) par le second terminal (4;5) en réponse à la détection du message de signalisation codé, et
- mise en communication du premier terminal (1;2) et du second terminal (4;5) par le réseau téléphonique (RT).

2. Procédé conforme à la revendication 1, comprenant en outre les étapes suivantes :
- composition (E1;F1) par le premier terminal (1;2) d'un numéro téléphonique prédéterminé (NAST1;NAST2) pour transmettre la première demande d'établissement de communication à un commutateur téléphonique (CAS) dans le réseau téléphonique (RT),
- transmission (E1;F4) du numéro téléphonique (NDIL3) du second terminal (4;5) au commutateur téléphonique (CAS) par le premier terminal (1;2),
- transmission (E6;F8) d'une seconde demande d'établissement de communication et d'informations de signalisation (INF1 à INF7 ; INF1a à INF7a) depuis le commutateur téléphonique (CAS) vers le commutateur de rattachement (C3) du second terminal (4;5) dans le réseau téléphonique (RT), lesdites informations de signalisation comprenant, lorsque ledit service téléphonique a été préalablement activé, au moins l'indicateur d'inhibition de service (INF6;INF6a) et l'indicateur de forçage (INF7; INF7a), et
- génération (E8;F10) du message de signalisation codé (MES;MESa) en fonction desdites informations de signalisation par le commutateur de rattachement (C3) du second terminal (4;5) ;
et selon lequel l'étape de mise en communication consiste en un aboutement (E12;F14) d'une communication entre le premier terminal (4;5) et le commutateur téléphonique (CAS) consécutive à la première demande d'établissement de communication à une communication entre le commutateur téléphonique (CAS) et le second terminal (4;5) consécutive à la seconde demande d'établissement de communication et à la prise de ligne par le second terminal (4;5).

3. Procédé conforme à la revendication 1 ou 2, selon lequel le message de signalisation codé (MES) comprend un identificateur (P3) du second terminal (4;5).

4. Procédé conforme à l'une quelconque des revendications 1 à 3, comprenant, suite à ladite mise en communication du premier terminal (1;2) et du second terminal (4;5) par le réseau téléphonique (RT), et lorsqu'une demande d'établissement de communication destinée au terminal téléphonique (3) est reçue par le réseau téléphonique (RT, C3), les étapes :
- transmission par le réseau téléphonique (RT, C3) d'un signal d'Indication d'Appel en Instance sur ladite ligne téléphonique (L3),
- détection du signal d'Indication d'Appel en Instance par le second terminal (4;5),
- libération de la ligne téléphonique (L3) par le second terminal (4;5) en réponse à la détection du signal d'Indication d'Appel en Instance, et
- présentation de ladite demande d'établissement de communication sur la ligne téléphonique (L3) par le réseau téléphonique (RT, C3), par activation du moyen de signalisation d'appel dans le terminal téléphonique (3).

## Claims

1. Method of setting up a communication between a first terminal (1; 2) and a second terminal (4; 5) through a telephone network (RT), the said second terminal being connected in parallel with a telephone terminal (3) provided with a means of call signalling over a common telephone line (L3) linked to a home exchange (C3) of the telephone network, comprising, following a first request for communication set-up transmitted (E1; F1) by the first terminal (1; 2) to the telephone network (RT), the following steps:
- if the home exchange (C3) receives a disable indicator (INF6; INF6a) associated with a telephone service activated for the telephone terminal (3) prior to the first communication set-up request, disabling (E7; F9) of the telephone service activated in the telephone network (RT) for the telephone terminal (3),
- if the home exchange (C3) receives a forcing indicator (INF7; INF7a) indicating that telephone communications via the said telephone line (L3) are barred, suspended or transferred, prior to the first communication set-up request, temporary validation of the telephone line,
and the following steps through the common telephone line:
- transmission (A, E9; F10) from the telephone network (RT) through the telephone line (L3) to the second terminal (4; 5) of a wakeup pulse whose mean power and whose duration are sufficient to wake up the second terminal and insufficient to activate the means of call signalling in the telephone terminal (3),
- transmission (B; E9; F10) of a coded signalling message (MES; MESa) containing an identifier of the second terminal (4; 5) from the telephone network (RT) to the telephone line (L3) linked to the second terminal (4; 5) and to the telephone terminal (3),
- detection (E10; F12) of the coded signalling message by the second terminal (4; 5),
- seizure (E11; F13) of the telephone line (L3) by the second terminal (4; 5) in response to a detection of the coded signalling message, and
- set-up of the communication between the first terminal (1; 2) and the second terminal (4; 5) by the telephone network (RT).

2. Method in accordance with Claim 1, furthermore comprising the following steps:
- dialling (E1; F1) by the first terminal (1; 2) of a predetermined telephone number (NAST1; NAST2) for transmitting the first communication set-up request to a telephone exchange (CAS) in the telephone network (RT),
- transmission (E1; F4) of the telephone number (NDIL3) of the second terminal (4; 5) to the telephone exchange (CAS) by the first terminal (1; 2),
- transmission (E6; F8) of a second request for communication set-up and of signalling information (INF1 to INF7; INF1a to INF7a) from the telephone exchange (CAS) to the home exchange (C3) of the second terminal (4; 5) in the telephone network (RT), the said signalling information comprising, when the said telephone service has been previously activated, at least the service disable indicator (INF6; INF6a) and the forcing indicator (INF7; INF7a), and
- generation (E8; F10) of the coded signalling message (MES; MESa) as a function of the said signalling information by the home exchange (C3) of the second terminal (4; 5);
and according to which the step of placing in communication consists of a joining (E12; F14) of a communication between the first terminal (4; 5) and the telephone exchange (CAS) consequential to the first request for communication set-up with a communication between the telephone exchange (CAS) and the second terminal (4; 5) consequential to the second request for communication set-up and upon line seizure by the second terminal (4; 5).

3. Method in accordance with Claim 1 or 2, according to which the coded signalling message (MES) comprises an identifier (P3) of the second terminal (4; 5).

4. Method in accordance with any one of Claims 1 to 3, comprising, following the said placing in communication of the first terminal (1; 2) and of the second terminal (4; 5) by the telephone network (RT), and when a communication set-up request intended for the telephone terminal (3) is received by the telephone network (RT, C3), the steps:
- transmission by the telephone network (RT, C3) of a Call Pending Indication signal on the said telephone line (L3),
- detection of the Call Pending Indication signal by the second terminal (4; 5),
- releasing of the telephone line (L3) by the second terminal (4; 5) in response to the detection of the Call Pending Indication signal, and
- presentation of the said request for communication set-up on the telephone line (L3) by the telephone network (RT, C3), by activation of the means of call signalling in the telephone terminal (3).

## Patentansprüche

1. Verfahren zum Aufbau einer Verbindung zwischen einem ersten Endgerät (1; 2) und einem zweiten Endgerät (4; 5) über ein Telefonnetz (RT), wobei das zweite Endgerät mit einem ein Rufsignalisierungsmittel aufweisenden Fernmeldeendgerät (3) auf einer gemeinsamen, mit einer Vermittlungsstelle (C3) des Telefonnetzes verbundenen Telefonleitung (L3) parallel geschaltet ist, das nach der Übertragung (E1; F1) einer ersten Aufforderung zum Aufbau einer Verbindung vom ersten Endgerät (1; 2) an das Telefonnetz (RT) folgende Schritte umfasst:
- bei Erhalt durch die Vermittlungsstelle (C3) eines Sperrindikators (INF6; INF6a), der einem Telefondienst zugeordnet ist, der vor der ersten Aufforderung zum Aufbau einer Verbindung für das Fernmeldeendgerät (3) aktiviert wurde, Sperren (E7; E9) des im Telefonnetz (RT) für das Fernmeldeendgerät (3) aktivierten Telefondienstes,
- bei Erhalt durch die Vermittlungsstelle (C3) eines Aufschaltindikators (INF7; INF7a), der darauf hinweist, dass vor der ersten Aufforderung zum Aufbau einer Verbindung Telefongespräche über die Telefonleitung (L3) gesperrt, zeitweise gesperrt oder weitergeleitet sind, vorübergehende Freigabe der Telefonleitung, und folgende Schritte über die gemeinsame Telefonleitung umfasst:
- Übertragen (A, E9; F10) vom Telefonnetz (RT) aus an das zweite Endgerät (4; 5) über die Telefonleitung (L3) eines Weckimpulses, dessen durchschnittliche Stärke und Dauer ausreichen, um das zweite Endgerät zu wecken und nicht ausreichen, um das Rufsignalisierungsmittel im Fernmeldeendgerät (3) zu aktivieren ;
- Übertragen (B; E9; F10) einer kodierten Signalisierungsnachricht (MES; MESa) mit einer Kennung des zweiten Endgerätes (4; 5) vom Telefonnetz (RT) an die mit dem zweiten Endgerät (4; 5) und dem Fernmeldeendgerät (3) verbundene Telefonleitung (L3),
- Erfassen (E10; F12) der kodierten Signalisierungsnachricht durch das zweite Endgerät (4; 5),
- Übernahme (E11; F13) der Telefonleitung (L3) durch das zweite Endgerät (4; 5) im Anschluss an das Erfassen der kodierten Signalisierungsnachricht und
- Aufbau der Verbindung zwischen dem ersten Endgerät (1; 2) und dem zweiten Endgerät (4; 5) durch das Telefonnetz (RT).

2. Verfahren nach Anspruch 1, das zudem folgende Schritte umfasst:
- Wählen (E1; F1) durch das erste Endgerät (1; 2) einer vorbestimmten Telefonnummer (NAST1; NAST2) zum Übertragen der ersten Aufforderung zum Aufbau einer Verbindung an eine Nebenstellenanlage (CAS) im Telefonnetz (RT),
- Übertragen (E1; F4) der Telefonnummer (NDIL3) des zweiten Endgerätes (4; 5) an die Nebenstellenanlage (CAS) durch das erste Endgerät (1; 2),
- Übertragen (E6; F8) einer zweiten Aufforderung zum Aufbau einer Verbindung und von Signalisierungsinformationen (INF1 bis INF7; INF1a bis INF7a) von der Nebenstellenanlage (CAS) aus an die Vermittlungsstelle (C3) des zweiten Endgerätes (4; 5) im Telefonnetz (RT), wobei die Signalisierungsinformationen bei vorheriger Aktivierung des Telefondienstes mindestens den Dienstsperrindikator (INF6; INF6a) und den Aufschaltindikator (INF7; INF 7a) enthalten, und
- Erzeugen (E8; F10) einer kodierten Signalisierungsnachricht (MES; MESa) in Abhängigkeit der Signalisierungsinformationen durch die Vermittlungsstelle (C3) des zweiten Endgerätes;
und wobei bei dem Schritt des Verbindungsaufbaus eine Verbindung zwischen dem ersten Endgerät (4; 5) und der Nebenstellenanlage (CAS) im Anschluss an die erste Aufforderung zum Aufbau einer Verbindung mit einer Verbindung zwischen der Nebenstellenanlage (CAS) und dem zweiten Endgerät (4; 5) im Anschluss an die zweite Aufforderung zum Aufbau einer Verbindung und die Übernahme der Leitung durch das zweite Endgerät (4; 5) zusammengeführt ((E12; F14) wird.

3. Verfahren nach Anspruch 1 oder 2 bei dem die kodierte Signalisierungsnachricht (MES) eine Kennung (P3) des zweiten Endgerätes (4; 5) enthält.

4. Verfahren nach einem der Ansprüche 1 bis 3, das im Anschluss an den Verbindungsaufbau zwischen dem ersten Endgerät (1; 2) und dem zweiten Endgerät (4; 5) durch das Telefonnetz (RT) und bei Eingang einer für das Fernmeldeendgerät (3) bestimmten Aufforderung zum Aufbau einer Verbindung beim Telefonnetz (RT, C3) folgende Schritte umfasst:
- Übertragen durch das Telefonnetz (RT, C3) eines anstehenden Rufanzeigesignals auf der Telefonleitung (L3),
- Erfassen des anstehenden Rufanzeigesignals durch das zweite Endgerät (4; 5),
- Freigabe der Telefonleitung (L3) durch das zweite Endgerät (4; 5) im Anschluss an das Erfassen des anstehenden Rufanzeigesignals und
- Anzeige der Aufforderung zum Aufbau einer Verbindung auf der Telefonleitung (L3) durch das Telefonnetz (RT, C3) durch Aktivieren des Rufsignalisierungsmittels im Fernmeldeendgerät (3).
